# EUROPÄISCHE PATENTSCHRIFT

(11) **EP 2 597 293 B1**
(45) Veröffentlichungstag und Bekanntmachung des Hinweises auf die Patenterteilung: **22.05.2019**
(21) Anmeldenummer: 12006377.1
(22) Anmeldetag: 11.09.2012
(51) Int. Cl.: F02K 9/42, F02K 9/60

(54) **Raketenstufe mit Flüssigantriebssystem**
Rocket stage with liquid propulsion system
Étage de fusée avec système de propulsion liquide

(30) Priorität: 25.11.2011 DE 102011119921
(43) Veröffentlichungstag der Anmeldung: 29.05.2013
(73) Patentinhaber: ArianeGroup GmbH, 82024 Taufkirchen (DE)
(72) Erfinder: Jäger, Markus, 28203 Bremen (DE); Wisse, Menko, 28209 Bremen (DE); Garcia, Jesús Gómez, 28195 Bremen (DE)
(74) Vertreter: Marschall, Stefan

(56) Entgegenhaltungen:
- US-A- 4 733 531
- US-A1- 2003 093 987
- US-B1- 7 093 337

## Beschreibung

Die Erfindung betrifft eine Raketenstufe zum Betrieb von Raumflugkörpern mit wenigstens je einer Primärstruktur, einem Tank zur getrennten Lagerung von Brennstoff und Oxidator, einem Triebwerk sowie mit einem Triebwerk-Schubgerüst, das die verschiedenen Komponenten miteinander verbindet.

Die derzeit verwendeten Trägerraketenstufen mit Flüssigantriebssystemen enthalten eine Reihe von Komponenten, die unterschiedliche Funktionen erfüllen. Dazu gehören Tanks zur Lagerung von Brennstoff und Oxidator, wobei der Brennstoff und der Oxidator entweder in separaten Tanks oder in einem Tank mit einer Trennwand zwischen Brennstoff und Oxidator gelagert werden, sowie ein sogenanntes Triebwerk-Schubgerüst, im Englischen als Engine Thrust Frame (ETF) bezeichnet. Letzteres leitet einerseits die Lasten des Triebwerks in den Tank und in die primäre Struktur ein und andererseits die Lasten des Trägers über die Primärstruktur in den Tank und das Triebwerk. Ferner umfassen derartige Raketenstufen Treibstoffhandhabungsgeräte, im Englischen als Propellant Management Devices (PMD) bezeichnet, die unter anderem der Sicherstellung der Versorgung des Triebwerks mit gas- und partikelfreiem Treibstoff auch bei einer minimal verbleibenden Treibstoffrestmenge oder dem Abbremsen des Dralls der Flüssigkeit dienen.

US 2003/093987 offenbart eine Vorrichtung zum Kombinieren von Strukturelementen innerhalb eines Antriebsgehäuses mit einem Treibstofftank. US 4 733 531 offenbart ein Leitsystem für einen flüssigen Treibstoff zum Antrieb eines Weltraumfahrzeugs.

Aufgabe der Erfindung ist es, eine Raketenstufe der eingangs genannten Art so auszubilden, dass sie ein möglichst niedriges Gewicht und ein kompaktes Design aufweist und darüber hinaus möglichst geringe Kosten verursacht.

Die Erfindung löst diese Aufgabe, indem sie bei einer derartigen Raketenstufe vorsieht, dass wenigstens ein Teil des Triebwerk-Schubgerüstes im Inneren des Tanks angeordnet ist, wobei dieser Teil des Triebwerk-Schubgerüstes innerhalb des Tanks derart vollständig geschlossen ausgebildet ist, dass im Tank voneinander getrennte Bereiche zur Lagerung der Komponenten des Treibstoffs gebildet sind.

Durch die erfindungsgemäß vorgesehene Integration der ansonsten separaten Komponenten Tank und Triebwerk-Schubgerüst zu einer Einheit ergeben sich eine äußerst kompakte Anordnung und zugleich eine erhebliche Gewichtsverminderung, außerdem wird auf diese Weise auch das Gewicht der angrenzenden Strukturen entsprechend reduziert. Durch das kompakte Design ist die Gesamtlänge der erfindungsgemäßen Raketenstufe wesentlich geringer als diejenige herkömmlicher Konfigurationen, was wiederum die mechanischen Lasten, wie Windlasten und die durch die Nutzlast induzierte Lasten nachhaltig reduziert. Zudem werden durch die erfindungsgemäß vorgesehene Ausbildung der Raketenstufe nach der Erfindung die verschiedenen Funktionen optimal auf die einzelnen Komponenten verteilt. So wird das im wesentlichen konusförmige Triebwerk-Schubgerüst zugleich zur Trennung von Brennstoff und Oxidator im Tank genutzt, außerdem reduziert es die geometrischen Residuals.

Durch die in der Erfindung vorgesehene Integration auch der Treibstoffhandhabungsgeräte wird die Kompaktheit der Anordnung noch weiter verbessert. Gleichzeitig werden die Komponenten der Treibstoffhandhabungsgeräte, wie Leitbleche und wiederbefüllbarer Flüssigkeitsbehälter, auch zur Lasteinleitung genutzt. Schließlich weist die Raketenstufe gemäß der Erfindung über die in speziellen Fällen erforderliche Wiederzündfähigkeit auf.

Nachfolgend soll die Erfindung anhand der Zeichnung näher erläutert werden. Es zeigen
- Fig. 1.: einen Teil einer Raketenstufe in geschnittener Darstellung,
- Fig. 2: eine vergrößerte Darstellung eines Teilbereiches der Anordnung gemäß Fig. 1,
- Fig. 3: eine andere Ansicht eines vergrößerten Teilbereiches der Anordnung gemäß Fig. 1,
- Fig. 4: eine abermals vergrößerte Darstellung eines Teilbereiches der Anordnung gemäß Fig. 3,
- Fig. 5-7: Darstellungen verschiedener Formen von Tanks für eine Raketenstufe,
- Fig. 8 und 9: Darstellungen alternativer Anordnungen von Triebwerk-Schubgerüsten in Tanks und
- Fig. 10 und 11: zwei weitere Darstellungen alternativer Triebwerk-Schubgerüstform für eine Raketenstufe.

In den Figuren sind gleiche bzw. einander entsprechende Bauteile mit den gleichen Bezugszeichen versehen.

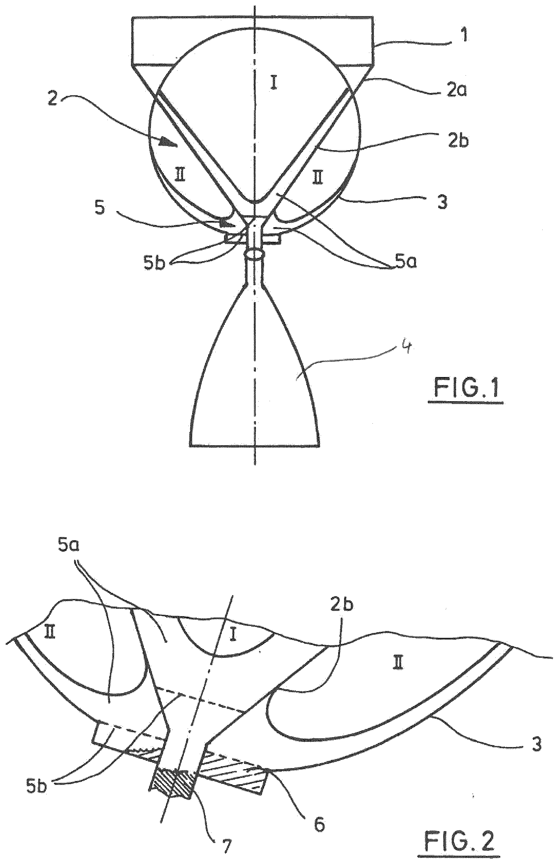

Die Darstellung gemäß Fig. 1 zeigt in schematischer Darstellung einen vertikalen Schnitt durch eine Raketenstufe, bei der an eine Primärstruktur 1 ein konusförmiges Triebwerk-Schubgerüst 2 angebunden ist, das seinerseits zum größten Teil in einen im Fall der hier gezeigten Anordnung kugelförmigen Tank 3 integriert ist, wobei der Teil 2b des Triebwerk-Schubgerüstes 2 im Tankinneren, angeordnet ist, während ein äußeren Ring 2a sich außerhalb dieses Tanks 3 befindet. Weiterhin umfasst die in Fig. 1 dargestellte Anordnung ein Triebwerk 4 sowie Treibstoffhandhabungsgeräte 5 mit Leitblechen 5a und wenigstens einem wiederbefüllbaren Flüssigkeitsbehälter 5b. Wie aus der Figur ersichtlich ist, sind bei dieser Anordnung die bei herkömmlichen Raketenstufen üblicherweise getrennt voneinander angeordneten Komponenten Tank 3 und Triebwerk-Schubgerüst 2 miteinander verbunden, ohne dass sie in ihren jeweiligen Funktionen beschränkt oder beeinträchtigt würden.

Die Integration des konusförmigen Triebwerk-Schubgerüstes 2 in den kugelförmigen Tank 3 verleiht dem konusförmigen Triebwerk-Schubgerüst 2 zwei weitere Funktionen. So unterteilt es durch seinen im Tank 3 angeordneten, als Trennwand 2b wirkenden Teil den Tank 3 in zwei Bereiche I und II, wie insbesondere in Fig. 1 erkennbar ist. Von diesen beiden Bereichen I und II nimmt während der Lagerung der eine Bereich den Brennstoff und der andere den Oxidator auf, wodurch eine Anordnung entweder mehrerer Tanks oder der Einbau einer separaten Trennwand nicht erforderlich ist. Eine intelligente Drucksteuerung zwischen den beiden Tankbereichen I und II bewirkt zudem, dass die Strukturmasse der konusförmigen Trennwand 2b auf ein Minimum reduziert werden kann.

Die in Fig. 1 dargestellte Kugelform des Tanks 3 stellt dabei die optimale Form eines Drucktanks zur Lagerung von Brennstoff und Oxidator dar, sofern ausschließlich das Auftreten von Drucklasten berücksichtigt wird. Da das Triebwerk 4, wie ebenfalls in Fig. 1 dargestellt, nur an einer Stelle mit der restlichen Raketenstufe verbunden ist und die Primärstruktur 1 eine im wesentlichen zylindrische Form aufweist, bildet zugleich das konusförmige Triebwerk-Schubgerüst 2 die optimale Form zur Lasteinleitung vom Zylinder der Primärstruktur 1 in den Verbindungspunkt für das Triebwerk 4 und von diesem zurück.

Die Leitbleche 5a stehen senkrecht zur Symmetrieachse der Raketenstufe und verbinden den breitesten Teil des Tanks 3 mit dem Tankauslass, um den Drall der Flüssigkeit zu bremsen und um diese zum Tankauslass zu leiten. Die wiederbefüllbaren Flüssigkeitsbehälter 5b sind oberhalb der Tankauslässe befestigt und halten eine ausreichende Flüssigkeitsmenge am Auslass, um einerseits aufgrund von Oberflächenspannungskräften die Gasfreiheit des Treibstoffs zu gewährleisten und um andererseits sicherzustellen, dass bei einer erneuten Zündung des Triebwerks 4 sofort Treibstoff zur Verfügung steht, noch bevor die Beschleunigung den Rest des Treibstoffs zum Tankauslass geführt hat. Die Leitbleche 5a und die wiederbefüllbaren Flüssigkeitsbehälter 5b sind dabei in den beiden Bereichen I und II des Tanks 3 angeordnet.

Die vergrößerte Darstellung eines Teilbereiches der vorangehend beschriebenen Anordnung in Fig. 2 zeigt, wie sich am Ende der letzten Brennphase der Raketenstufe etwaige Restmengen an Brennstoff 6 und Oxidator 7 mit maximal zulässigem Winkel im Bereich der Treibstoffhandhabungsgeräte 5 ansammeln. Aufgrund der einzelnen Winkel bzw. Ecken innerhalb der integrierten Geometrie des Tanks 3 und des konusförmigen Triebwerk-Schubgerüstes 2 verringern sich in der Antriebsphase die Restreibstoffmengen 6 und 7 im Vergleich zu denen in herkömmlichen Tanks. Durch die Längsbeschleunigung werden die Flüssigkeiten 6 und 7 in Richtung auf den Tankboden gedrückt, wo das Triebwerk 4 angeordnet ist und wo sich die Tankauslassstutzen zu den Förderleitungen befinden. Insgesamt führt die integrierte Tankform so zu einer etwa 50%-igen Reduzierung der Restreibstoffmengen 6, 7 im Vergleich zu derjenigen in herkömmlichen Tanks. Oberflächenkräfte, die durch die vorhandenen Ecken angeregt werden, verringern diese Resttreibstoffmengen noch weiter, auch ohne dass hierzu der Einbau weiterer Treibstoffhandhabungsgeräte erforderlich wäre.

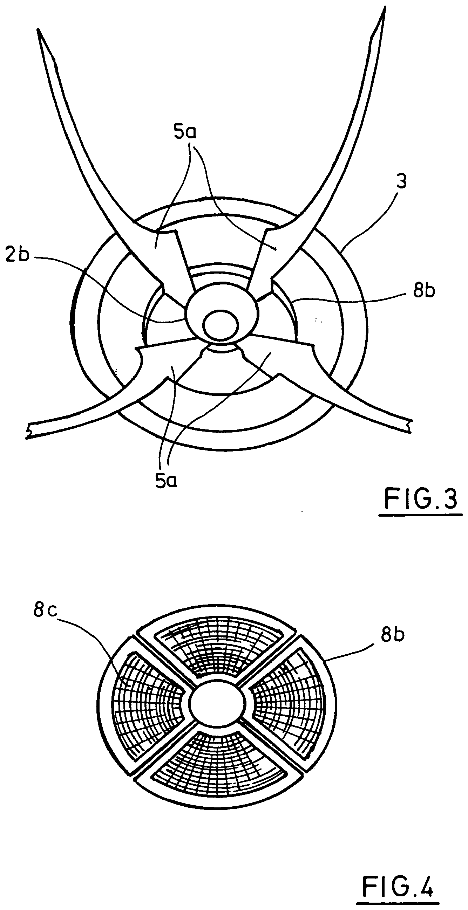

Die nochmals vergrößerte Darstellung eines Teilbereiches der Anordnung gemäß Fig. 1 in den Figuren 3 und 4 zeigt den Einbau in den Bereich II des Tanks 3 mit den Leitblechen 5a sowie mit dem wiederbefüllbaren Flüssigkeitsbehälter 5b, zusammengesetzt aus Durchlässen 8a, die durch eine scheibenförmige Verstärkung 8b unterstützt werden, die ihrerseits durch die Siebe 8c abgedeckt ist.

Die Integration der Treibstoffhandhabungsgeräte 5 in die Anordnung unterstützt im Bereich der Auslässe des Tanks 3 das konusförmige Triebwerk-Schubgerüst 2 in seiner lasttragenden Funktion zur Einleitung der Triebwerkslasten in die Primärstruktur 1. Der Lastweg geht dabei überwiegend durch das konusförmige Triebwerk-Schubgerüst 2, so dass keine zusätzlichen Supports benötigt werden. Die Leitbleche haben ansonsten ihre kapillare Funktion, um Flüssigkeit zu binden, sie in den unteren Teil des Tanks 3 zu leiten und sie dort zu halten. Erwähnt sei, dass auch der in den Figuren 1 und 2 erkennbare Bereich I mit derartigen Leitblechen 5a und wiederbefüllbaren Flüssigkeitsbehältern 5b versehen ist.

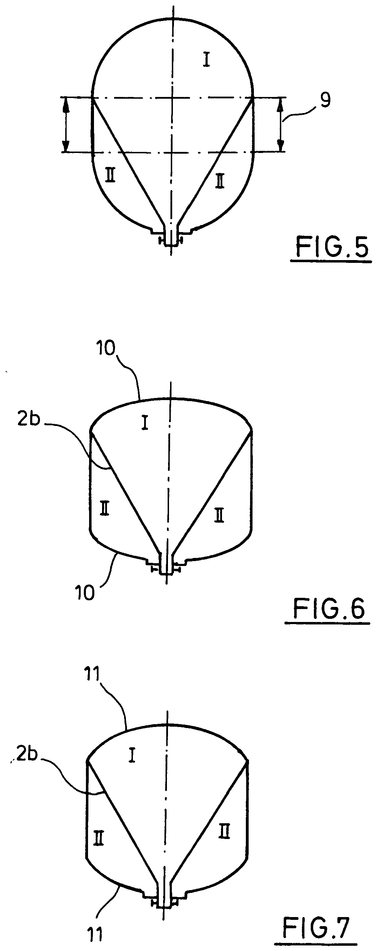

Da die Optimierung des Durchmessers und der Höhe einer Raketenstufe auch von der gesamten Trägerkonfiguration abhängt, ist es für eine Optimierung der Trägerleistung einer Raketenstufe wichtig, dass der Durchmesser und die Länge des Tanks variiert werden können. Da durch rein kugelförmige Tankdome unter Umständen relativ große Leervolumina entstehen können, in deren Folge eine Trägerstufe unnötig groß geraten kann, ist eine reine Kugelform eines derartigen Tanks nicht in allen Fällen optimal. In den Figuren 5 bis 7 sind deshalb mögliche Varianten von Tanks dargestellt, die in manchen Fällen zu besser angepassten Lösungen führen.

Dies kann ein Tank mit einem zylindrischen Zwischenstück 9 sein, wie er in Fig. 5 gezeigt ist, ein Tank mit im wesentlichen elliptischen Domen 10 gemäß Fig. 6 oder aber ein Tank 11 mit kalottenförmigen Domen 11, wie er in Fig. 7 dargestellt ist.

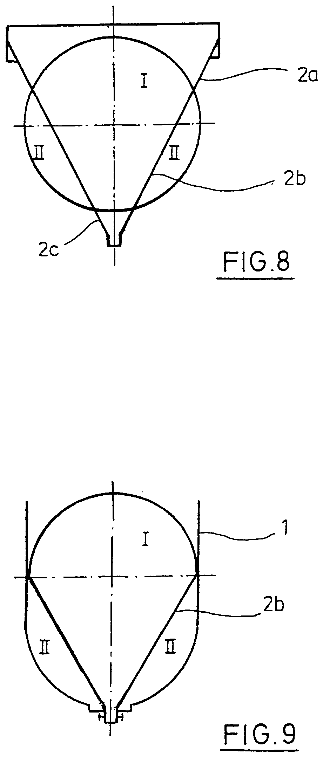

Bei dem im wesentlichen konusförmigen Triebwerk-Schubgerüst 2 kann die Trennwand 2b einerseits mit einem konusförmigen Ring 2a, dem sogenannten Conical Tank Attachment Ring, zur Primärstruktur 1 und andererseits mittels einer Tankverlängerung 2c zum Triebwerk 4 hin verlängert werden, wie dies in Fig. 9 gezeigt ist. Die Tankverlängerung 2c ermöglicht dabei eine bessere Einleitung der Aktuatorstellkräfte und der Triebwerkskräfte. Jedoch ist diese Anordnung nicht ganz so kompakt und zugleich komplexer als eine solche ohne eine derartige Tankverlängerung 2c. Um andererseits ein vorhandenes Volumen besser auszunutzen, kann alternativ dazu aber auch der konusförmige Ring 2a gänzlich entfallen, wie dies in Fig. 9 dargestellt ist. In einem solchen Fall müssen jedoch die Lasten des Trägers von der Tankschale mit übernommen werden.

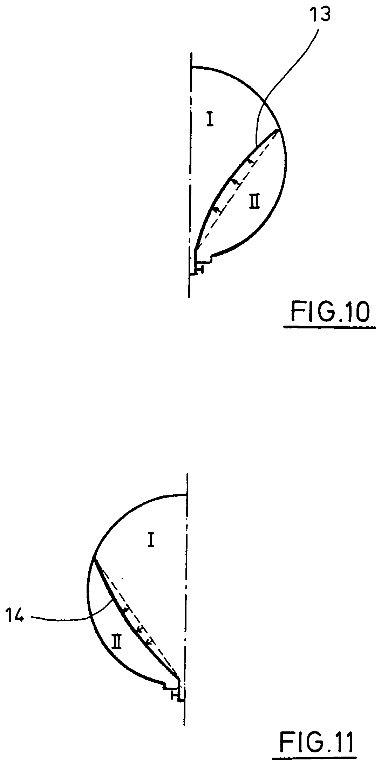

Bei den vorstehend beschriebenen Anordnungen ist das Triebwerk-Schubgerüst konusförmig ausgebildet. Je nach der Systemanforderung kann es aber auch von dieser Form abweichen. In den Figuren 10 und 11 sind Gerüste mit jeweils gebogenen Längsflächen dargestellt. Dies kann entweder, wie in Fig. 10 angedeutet, mit einer konkaven Biegung 13 realisiert werden oder aber, gemäß Fig. 11, einer konvexen Biegung 14. Die Wahl der optimalen Biegung der Längsflächen des Triebwerk-Schubgerüstes hängt dabei unter anderem vom Differenzdruck zwischen den beiden Tankkammern I und II ab, ferner vom Anbindungspunkt an die Primärstruktur und von den benötigten Volumina der beiden Tankkammern I und II. In jedem Fall muss bei der Berücksichtigung von gebogenen Längsflächen gewährleistet sein, dass der Differenzdruck immer in Richtung der Biegung wirkt, da ansonsten die Gefahr einer Beulenbildung besteht. Auch ist der Lastverlauf der Triebwerkslasten ungünstiger, da er keine gerade Linie mehr bildet, und die Herstellung einer solchen Konusstruktur ist zudem komplexer.

## Patentansprüche

1. Raketenstufe zum Betrieb von Raumflugkörpern mit wenigstens je einem Tank zur getrennten Lagerung von Brennstoff und Oxidator, einem Triebwerk, einem Triebwerk-Schubgerüst sowie mit einer Primärstruktur, die die verschiedenen Komponenten miteinander verbindet, wobei wenigstens ein Teil des Triebwerk-Schubgerüstes (2) im Inneren des Tanks (3) angeordnet ist, wobei dieser Teil (2b) des Triebwerk-Schubgerüstes (2) innerhalb des Tanks (3) derart vollständig geschlossen ausgebildet ist, dass im Tank (3) voneinander getrennte Bereiche (I, II) zur Lagerung der Komponenten des Treibstoffs gebildet sind,
**gekennzeichnet durch** im Inneren des Tanks (3) zusätzlich angeordnete Treibstoffhandhabungsgeräte (5), die mit Leitblechen (5a) und wenigstens einem wiederbefüllbaren Flüssigkeitsbehälter (5b) ausgestattet sind.

2. Raketenstufe nach Anspruch 1, **dadurch gekennzeichnet, dass** das Triebwerk-Schubgerüst (2) mittels eines im wesentlichen konusförmigen Ringes (2a) mit der Primärstruktur (1) verbunden ist.

3. Raketenstufe nach einem der Ansprüche 1 oder 2, **dadurch gekennzeichnet, dass** das Triebwerk-Schubgerüst (2) zusätzlich mittels einer scheibenförmigen Verstärkung (8b) mit dem Triebwerk (4) verbunden ist.

4. Raketenstufe nach einem der Ansprüche 1 bis 3, **dadurch gekennzeichnet, dass** das Triebwerk-Schubgerüst (2) über eine Verlängerung (2c) mit dem Triebwerk (4) verbunden ist.

5. Raketenstufe nach einem der Ansprüche 1 bis 4, **dadurch gekennzeichnet, dass** der Tank (3) im wesentlichen kugelförmig ausgebildet ist.

6. Raketenstufe nach einem der Ansprüche 1 bis 4, **dadurch gekennzeichnet, dass** der Tank mit im wesentlichen elliptischen Domen (10) ausgestattet ist.

7. Raketenstufe nach einem der Ansprüche 1 bis 4, **dadurch gekennzeichnet, dass** der Tank mit im wesentlichen kalottenförmigen Domen (11) ausgestattet ist.

8. Raketenstufe nach einem der Ansprüche 1 bis 7, **dadurch gekennzeichnet, dass** der Tank mit einem zylindrischen Zwischenstück (9) ausgestattet ist.

## Claims

1. A rocket stage for operating space craft having at least one tank in each case for the separate storage of fuel and oxidizer, a power unit, a power unit thrust frame and having a primary structure, which connects the various components to one another, at least one part of the power unit thrust frame (2) being arranged in the interior of the tank (3), this part (2b) of the power unit thrust frame (2) being constructed inside the tank (3) in such a completely closed manner that mutually separate regions (I, II) are formed in the tank (3) for storing the components of the propellant,
**characterized by** propellant handling equipment (5) additionally arranged in the interior of the tank (3), which is equipped with fairing plates (5a) and at least one refillable liquid tank (5b).

2. The rocket stage according to Claim 1, **characterized in that** the power unit thrust frame (2) is connected by means of a substantially conical ring (2a) to the primary structure (1).

3. The rocket stage according to one of Claims 1 or 2,
**characterized in that** the power unit thrust frame (2) is additionally connected by means of a disc-shaped reinforcement (8b) to the power unit (4).

4. The rocket stage according to one of Claims 1 to 3,
**characterized in that** the power unit thrust frame (2) to the power unit (4) by means of an extension (2c).

5. The rocket stage according to one of Claims 1 to 4,
**characterized in that** the tank (3) is constructed substantially spherically.

6. The rocket stage according to one of Claims 1 to 4,
**characterized in that** the tank is equipped with substantially elliptical domes (10).

7. The rocket stage according to one of Claims 1 to 4,
**characterized in that** the tank is equipped with substantially dome-shaped domes (11).

8. The rocket stage according to one of Claims 1 to 7,
**characterized in that** the tank is equipped with a cylindrical intermediate piece (9).

## Revendications

1. Étage de fusée, destiné à faire fonctionner des engins spatiaux, pourvu d'au moins respectivement un réservoir pour le stockage séparé de carburant et d'oxydant, d'un réacteur, d'un bâti propulseur pour le réacteur, ainsi que d'une structure primaire qui relie entre eux les différents composants, au moins une partie du bâti propulseur pour le réacteur (2) étant placée à l'intérieur du réservoir (3), ladite partie (2b) du bâti propulseur pour le réacteur (2) étant conçue à l'intérieur du réservoir (3) en étant complètement fermée, de telle sorte que dans le réservoir (3) soient créées des zones séparées (I, II) les unes des autres, pour le stockage des composants du carburant,
**caractérisé par** des appareils de manipulation du carburant (5) placés en supplément à l'intérieur du réservoir (3) qui sont équipés de déflecteurs (5a) et d'au moins un réservoir à liquide (5b) rechargeable.

2. Étage de fusée selon la revendication 1, **caractérisé en ce que** le bâti propulseur pour le réacteur (2) est assemblé à l'aide d'une bague (2a) de forme sensiblement conique avec la structure primaire (1).

3. Étage de fusée selon la revendication 1 ou 2,
**caractérisé en ce que** le bâti propulseur pour le réacteur (2) est relié en supplément à l'aide d'un renfort (8b) en forme de disque avec le réacteur (4).

4. Étage de fusée selon l'une quelconque des revendications 1 à 3, **caractérisé en ce que** le bâti propulseur pour le réacteur (2) est relié avec le réacteur (4) par l'intermédiaire d'une rallonge (2c).

5. Étage de fusée selon l'une quelconque des revendications 1 à 4, **caractérisé en ce que** le réservoir (3) est conçu de forme sensiblement sphérique.

6. Étage de fusée selon l'une quelconque des revendications 1 à 4, **caractérisé en ce que** le réservoir est équipé de dômes (10) sensiblement de forme elliptique.

7. Étage de fusée selon l'une quelconque des revendications 1 à 4, **caractérisé en ce que** le réservoir est équipé de dômes (11) sensiblement en forme de calottes.

8. Étage de fusée selon l'une quelconque des revendications 1 à 7, **caractérisé en ce que** le réservoir est équipé d'une pièce intermédiaire (9) cylindrique.
